(19) Europäisches Patentamt
European Patent Office
Office européen des brevets

(11) Publication number: 0 038 094
B1

(12) EUROPEAN PATENT SPECIFICATION

(45) Date of publication of patent specification: 04.07.84

(51) Int. Cl.³: C 08 G 69/26, C 08 G 69/28

(21) Application number: 81200327.5

(22) Date of filing: 25.03.81

# (54) Preparation of high molecular polytetramethylene adipamide.

(30) Priority: 26.03.80 NL 8001764

(43) Date of publication of application: 21.10.81 Bulletin 81/42

(45) Publication of the grant of the patent: 04.07.84 Bulletin 84/27

(84) Designated Contracting States: BE CH DE FR GB IT LI NL

(56) References cited:

JOURNAL OF POLYMER SCIENCE, Polymer Chemistry, Edition, vol. 15, no. 3, March 1977, R.J. GAYMANS et al. "Preparation and some properties of nylon 46" pages 537-545

(73) Proprietor: STAMICARBON B.V.
Postbus 10
NL-6160 MC Geleen (NL)

(72) Inventor: Gaymans, Reinoud Jaap
Verdilaan 3
NL-7522 MA Enschede (NL)
Inventor: Bour, Edmond Hendrik Joseph Piet
Vriendenkringstraat 34
NL-6141 LJ Limbricht (NL)

(74) Representative: Hatzmann, Marinus Jan et al,
OCTROOIBUREAU DSM P.O.Box 9
NL-6160 MA Geleen (NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 038 094 B1

## Description

The invention relates to a method for the preparation of high-molecular polytetramethylene adipamide by aftercondensation, in the solid phase, of a polytetramethylene adipamide prepolymer.

It is known to prepare high-molecular polyamides by aftercondensation of the corresponding polyamide with lower molecular weight at a temperature below the melting point. Thus high-molecular nylon 6 or nylon 6.6 can be prepared.

The aftercondensation is practically always effected in an inert oxygen-free atmosphere, mostly a nitrogen atmosphere, at atmospheric or reduced pressure.

Thus the Journal of Polymer Science, Polymer Chemistry Edition, Vol. 15, no. 3, March 1977, pages 537—545 describes the preparation of a high-molecular nylon 4.6 by aftercondensation of a prepolymer in the solid phase in a nitrogen atmosphere or in vacuum. In this manner the desired high molecular weight is achieved, but the polyamide also shows strong discolouration.

The purpose of the invention is to find a method for the aftercondensation of nylon 4.6, in which process this disadvantage does not occur and a high molecular weight can be obtained.

The invention consists in a method for the preparation of high-molecular white polyamide, consisting of units of

$$[NH—(CH_2)_4—NH—CO(CH_2)_4—CO],$$

by aftercondensation of a low-molecular prepolymer, consisting of units of

$$[NH—(CH_2)_4—NH—CO(CH_2)_4—CO],$$

in which process a prepolymer is started from which has a content of cyclic end groups not exceeding 0,20 mgeq/g of prepolymer and has been prepared with application of an excess of 0.5 to 15 moles-% of 1.4 diaminobutane in respect of the quantity equivalent to the adipic acid applied, and this is subjected to aftercondensation in the solid phase in an atmosphere containing water vapour.

It is found that thus a high molecular white polyamide can be prepared. The polyamide can be used for the manufacture of objects, films and filaments.

It can be worked up by injection moulding, extrusion, moulding, melt spinning and working up from a solution.

The homopolymer polytetramethylene adipamide (nylon 4.6), prepared correctly, has surprising properties, which make it very suitable for working up to filaments, yarns and objects. The invention is therefore substantially aimed at the preparation of homopolymer nylon 4.6. However, a copolyamide can also be prepared consisting for at least 80% by weight of units derived from 1.4 butane diamine and adipic acid and up to 20 parts by weight derived from other polyamideforming compounds. As other polyamide-forming compounds can be mentioned lactams such as caprolactam, valerolactam, undecalactam and laurolactam, amino carboxylic acids, aliphatic and aromatic dicarboxylic acids, such as succinic acid, sebacic acid, isophthalic acid and terephthalic acid, and diamines, such as hexamethylene diamine or 1.4-aminomethylcyclohexane.

The prepolymer can be prepared by heating the salt of 1.4-diaminobutane and adipic acid with an excess of 1.4-diaminobutane for some time at a temperature of between 150°C and 310°C, preferably at elevated pressure. The formation of the prepolymer can be effected, if desired, in an inert solvent. A very suitable method for the preparation of the prepolymer is described in EP—81 200 326.7 filed simultaneously.

The molecular weight of the prepolymer may be between 1000 and 10,000. Preferably a prepolymer with a molecular weight of between 2000 and 6000 is started from. The prepolymer is subjected, in solid form, to aftercondensation, preferably in the form of small particles of which the particle size distribution is not too wide. The dimensions may, for instance, be between 1.0 and 1.5 mm or between 0.1 and 0.2 mm.

The prepolymer must not be discoloured and must have a relative excess of amino end groups. The number of amino end groups must preferably be at least be equal to the sum of the number of carboxyl end groups and the number of end groups of a different kind. End groups of a different kind are here understood to mean all end groups not being amino or carboxyl groups. There are substantially pyrrolidonyl end groups that may be formed by cyclisation of diaminobutane followed by polycondensation or by cyclisation of the terminal diaminobutane moiety of the chain. The amount of cyclic end groups in the prepolymer should not exceed 0.20 milligram equivalent per gram of polymer, as prepolymers with a larger amount of cyclic endgroups cannot in practice be converted to high molecular weight polyamide. Preferably the amount of cyclic end groups does not exceed 0.15 mgeq/g and better yet does not exceed 0.10 mgeq/g. At a content of cyclic (pyrrolidinyl) end groups between 0.10 and 0.15 mgeq/g, the prepolymer can be converted to higher molecular weight polyamide if fairly large excess of diaminobutane has been used in its preparation. A prepolymer containing less than 0.10 mgeq/g of cyclic end groups and having a proper balance between amino end groups and carboxyl end groups will easily be converted to a high molecular weight polyamide. By the aftercondensation of a (white) prepolymer in solid form in an atmospheric containing water vapour, a white

polyamide is obtained in all cases. If in the prepolymer no or a very small excess of diaminobutane has been worked up, no polyamide with a high molecular weight is obtained. A white polyamide with a high molecular weight is only to be obtained by starting from a prepolymer in which a definite excess of diaminobutane has been worked up. This is surprising, because it would sooner be expected that the excess of diamine would lower the molecular weight in consequence of the imbalance between amino groups and carboxyl groups. The excess of 1.4-diaminobutane is preferably added already to the diamine-dicarboxylic acid salt from which the prepolymer is prepared by using, in the preparation of the salt, an excess of diamine or by adding extra diamine to the equimolar salt. An excess of between 0.5 and 15 moles-% can be applied, calculated in respect of the quantity of 1.4-diaminobutane equimolar with the dicarboxylic acid, and preferably an excess of between 1 and 5 moles-%.

The aftercondensation is effected in an atmospheric containing water vapour. Generally, an atmosphere containing 5 to 100% by volume of water vapour will be applied.

An atmosphere consisting exclusively of steam can be applied or a gas mixture consisting for at least 5% by volume of water vapour and free of oxygen. Very suitable are the mixtures of an inert gas, for instance nitrogen, with hydrogen, containing preferably between 20 and 50% by volume of water vapour. A stationary gas phase can be used, or the gas can be passed through the reactor.

The pressure at which the aftercondensation is effected is of minor importance and can generally be chosen between 0.001 and 10 bar. For practical and economic reasons a pressure of about 1 bar will preferably be chosen. At a reduced pressure the reaction will be slightly quicker.

The aftercondensation is effected in the solid phase, hence at a temperature below the softening point of the polyamide. To restrict the duration of the aftercondensation, a temperature of at least 200°C is desirable. Very suitable are temperatures of between 225 and 275°C.

To obtain a homogeneous product it is desirable to keep the polyamide particles moving during the aftercondensation. To achieve this the reaction can be effected in a rotating drum, in a stationary reactor provided with stirrers or in an expanded or fluidized bed.

The duration of the aftercondensation depends on the desired molecular weight, the temperature, the molecular weight of the prepolymer and to some extent on the pressure. Preferably such conditions are chosen that the (number-average) molecular weight of the polyamide will be between 15,000 and 75,000 and more specifically between 20,000 and 50,000. At 250°C the duration of the reaction is in most cases between 2 and 12 hours. A longer time is possible as well. In order to reduce the reaction time or to reach a higher molecular weight in a certain length of time, a prepolymer containing an acid polymerization catalyst may be started from. The latter may have been added before, during or after the formation of the prepolymer. Very suitable are inorganic acids of little or no volatility, specifically phosphoric acid.

The prepolymer may contain usual additives, such as pigments or matting agents, in so far as they do not disturb the aftercondensation. The addition of compounds, such as phosphines or phosphites to prevent discolouration during the aftercondensation is not necessary in applying the method according to the invention.

The invention will be elucidated by means of the following examples.

Example I

A prepolymer was prepared by heating dry 1.4-diaminobutane adipic-acid salt, containing an excess of diamine of 5.4 moles-%, calculated in respect of the quantity of adipic acid, in an autoclave in 4 hours from room temperature to 220°C.

Subsequently the pressure was relieved and the reaction mass was cooled, taken from the autoclave and ground to an average particle size of between 0.1 and 0.2 mm. This white prepolymer had a number-average molecular weight ($M_n$) of 2,100 ($\eta_{rel}$ of 1,25).

The prepolymer was subjected, in fluidized form, to aftercondensation by heating it for 4 hours at 250°C while passing through steam at a pressure of 1 bar. Thus a white polytetramethylene adipamide was obtained with an $M_n$ of 15,400. The UV-absorption, measured in respect of an 0.5% by weight solution in formic acid at 290 nm, was 0.023.

Example II

The method described above was repeated, starting from the same prepolymer, but now at reduced pressure. By carrying out the aftercondensation at a pressure of 0.066 bar, a white polyamide with an $M_n$ of 19,000 ($\eta_{rel}$ 2.72) was obtained. By carrying out the aftercondensation at 0.026 bar, a white polyamide with an $M_n$ of 19,300 ($\eta_{rel}$ 2.80) was obtained.

Example III, comparative example

The method of example I was repeated, starting from the same prepolymer, but now with application of ammonia as gas phase in the aftercondensation at 1 bar. Thus a discoloured product with an $M_n$ of 6,100 was obtained ($\eta_{rel}$ 1.61, UV absorption 0.10).

When repeating the experiment, but now with nitrogen as gas, a strongly discoloured product was obtained.

Example IV

A prepolymer was prepared by heating a dry 1.4-diaminobutane-adipic acid salt, containing an excess of 9.5 moles-% of the diamine, in 220

minutes from room temperature to 212°C at a pressure of 15 bar at most.

The prepolymer was ground in the manner described in example I and heated in fluidized condition for 6 hours at 260°C at a pressure of 1 bar while passing through a gas mixture consisting of nitrogen and steam (proportion by volume 3:1).

Thus white polytetramethylene adipamide with an $M_n$ of 25,500 was obtained.

Example V

A prepolymer was prepared by heating a dry 1.4-diaminobutane-adipic acid salt, containing an excess of 8 moles-% of diamine, in 220 minutes to 212°C at a pressure of 17 bar at most by further condensation in the manner described in Example IV, a white polytetramethylene adipamide with an $M_n$ of 21,400 was obtained.

Example VI

A prepolymer was prepared by heating a dry 1.4-diaminobutane-adipic salt, containing an excess of 8 moles-% of diamine, in 200 minutes to 200°C at a pressure of 13 bar at most. By further condensation in the manner described in Example IV, a white polytetramethylene adipamide with an $M_n$ of 34,700 was obtained.

Example VII

A prepolymer was prepared by heating a dry 1.4-diaminobutane-adipic acid salt, containing an excess of 8 moles-% of diamine, together with 0.1% by weight of phosphoric acid, calculated in respect of the total, in 220 minutes to 200°C at a pressure of 19 bar at most.

By further condensation in the manner described in Example IV, a white polytetramethylene adipamide with an $M_n$ of 40,000 was obtained.

Example VIII

A prepolymer was prepared by heating a dry 1.4-diaminobutane-adipic acid salt, containing an excess of 1.3 moles-% of diamine, in 220 minutes to 185°C at a pressure of 13 bar at most. By further condensation in the manner described in Example IV, a white polytetramethylene adipamide with an $M_n$ of 26,100 was obtained.

Example IX

A prepolymer was prepared by heating a dry 1.4-diaminobutane-adipic acid salt, containing an excess of 2.1 moles-% of diamine, in 160 minutes to 195°C at a pressure of 17 bar at most.

By further condensation in the manner described in Example IV, but now for 20 hours, a white polytetramethylene adipamide with an $M_n$ of 41,900 was obtained.

Example X

A number of prepolymers based on diaminobutane and adipic acid and in experiment m) further containing 11-aminoundecanoic acid, were subjected to aftercondensation in the solid phase as described in Example I. The temperature and duration of the aftercondensation as well as physical data of the prepolymers and of the final polyamide product are recorded in Table I. Experiments b), c), d), e), f) and h) concern the prepolymers and polymers of respectively Examples VI, IV, VIII, IX, VII and I.

TABLE I

| Exp't | Prepolymer excess DAB mole % | [pyr] meq/g | $[NH_2]$ meq/g | [COOH] meq/g | $\eta_{rel}$ | After condensation $\eta_{rel}$ | [pyr] meq/g | Time hours | Temperature °C |
|---|---|---|---|---|---|---|---|---|---|
| a | 2.1 | 0.018 | 0.944 | 0.625 | 1.20 | 4.27 | 0.003 | 4 | 260 |
| b | 8 | 0.028 | 0.970 | 0.550 | 1.19 | 4.92 | 0.003 | 6 | 260 |
| c | 9.5 | 0.047 | 1.02 | 0.51 | 1.20 | 3.40 | 0.011 | 6 | 260 |
| d | 1.3 | 0.033 | 0.55 | 0.45 | 1.22 | 3.58 | 0.005 | 6 | 260 |
| e | 2.1 | 0.032 | 0.53 | 0.29 | 1.30 | 6.15 | 0.028 | 20 | 260 |
| f | 8.0 | 0.045 | 1.150 | — | 1.16 | 6.0 | 0.007 | 6 | 260 |
| g | 5.4 | 0.122 | — | — | 1.20 | 3.37 | 0.018 | 4 | 260 |
| h | 5.4 | 0.027 | 0.86 | 0.68 | 1.25 | 2.36 | — | 4 | 250 |
| k | 2.4 | 0.053 | 0.128 | 0.127 | 1.66 | 2.75 | 0.037 | 4 | 260 |
| l* | 2.4 | 0.263 | 0.051 | 0.193 | 1.36 | 1.71 | 0.109 | 4 | 260 |
| m** | 2.0 | 0.30 | — | — | 1.20 | 2.51 | 0.004 | 4 | 260 |

* not according to the invention

** prepolymer prepared from 80 parts by weight of 1.4-diaminobutane-adipic acid salt, 1 pbw of 11-aminoundecanoic acid and 10 pbw of water.

Determination of the pyrrolidine endgroups in nylon 4.6

A glass tube containing 0.25 g of dry polyamide and 0.5 ml of 6 N hydrochloric acid is flushed with nitrogen, sealed and heated to 130°C in an oil-bath. This temperature is maintained until the polyamide dissolves and for four hours afterwards. The tube is then cooled, with

attendant formation of crystals of adipic acid, and opened. A sample for gas-chromatographic analysis is obtained by diluting 0.20 ml of the supernatant liquid with 0.70 ml of 2 N alcoholic sodium hydroxide.

Analysis is carried out by bringing 1 $\mu$ l of the sample on a preconditioned Chromosorb (Chromosorb is a registered Trade Mark) 130 column of 1,5 m x 1/4" which is heated for one minute at 150°C and then heated to 220°C with a heating rate of 13°C/minute. Detection is carried out by flame ionisation method.

The pyrrolidone peak is detected after 4,5 minutes and the 1.4-diaminobutane peak after 8 minutes. The diaminobutane content of nylon 4.6 is 0.005 mole/g. The pyrrolidine content is calculated on the basis of the ratio between the area of the diaminobutane peak and the area of the pyrrolidine peak with the formula [pyr]=5000/peak ratio, expressed in mmol pyrrolidine/g of polymer.

## Claims

1. Method for the preparation of high-molecular white polyamide consisting of units of

$$[NH—(CH_2)_4—NH—CO—(CH_2)_4—CO],$$

optionally containing up to 20% by weight of units derived from other polyamide forming compounds, by aftercondensation of a low molecular prepolymer, consisting of said units, characterized in that the prepolymer has a content of cyclic end groups not exceeding 0.20 mg equivalent per gram, and has been prepared using an excess of 0.5 to 15 moles-% of 1.4-diaminobutane with respect to the quantity equivalent to the adipic acid, used, and this is subjected to aftercondensation in the solid phase in an atmosphere containing water vapour.

2. Method according to claim 1, characterized in that a prepolymer is started from which has been prepared with application of an excess of between 1 and 5 moles-% of 1.4-diaminobutane.

3. Method according to claims 1—2, characterized in that the prepolymer has a content of cyclic end groups which does not exceed 0.15 mgeq/g.

4. Method according to claims 1—3, characterized in that the prepolymer has a content of cyclic end groups which does not exceed 0.10 mgeq/g.

5. Method according to claims 1—4, characterized in that the atmosphere contains at least 5% by volume of water vapour.

6. Method according to claims 1—5, characterized in that the aftercondensation is carried out at a pressure of between 0.001 and 10 bar and a temperature of between 225°C and 275°C.

7. Method according to claims 1—6, characterized in that a prepolymer is applied containing an acid polycondensation catalyst.

8. Method according to claims 1—7, characterized in that a white polyamide with a molecular weight of between 15,000 and 75,000 is prepared.

9. Method according to claims 1—8, characterized in that a white polyamide with a molecular weight of between 20,000 and 50,000 is prepared.

10. Method according to claims 1—9, characterized in that the homopolymer polytetramethylene adipamide is prepared.

11. Polyamide, obtained by applying the method according to any one or more of the claims 1—10.

12. Object, wholly or partly consisting of polyamide obtained by applying the method according to any one or more of the claims 1—10.

## Patentansprüche

1. Verfahren zur Herstellung von hochmolekularem, weissem Polyamid, bestehend aus Einheiten von

$$[NH—(CH_2)_4—NH—CO—(CH_2)_4—CO],$$

welches wahlweise bis zu 20 Gew.-% aus anderen Polyamid bildenden Verbindungen abgeleitete Einheiten enthält durch Nachkondensieren eines niedermolekularen, aus besagten Einheiten bestehenden Vorpolymers, dadurch gekennzeichnet, dass das Vorpolymer einen Gehalt von zyklischen Endgruppen aufweist, der 0,20 Milligrammäquivalent je Gramm nicht übersteigt und dass es hergestellt wurde unter Verwendung eines Überschusses von 0,5 bis 15 Mol-% von 1,4-Diaminobutan in bezug auf die der verwendeten Adipinsäure äquivalente Menge und dass dieses in der festen Phase in einer Wasserdampf enthaltenden Atmosphäre nachkondensiert wird.

2. Verfahren nach Anspruch 1, dadurch gekennzeichnet, dass von einem Vorpolymer ausgegangen wird, welches unter Verwendung eines Überschusses von 1 bis 5 Mol-% von 1,4-Diaminobutan hergestellt wurde.

3. Verfahren nach den Ansprüchen 1—2, dadurch gekennzeichnet, dass das Vorpolymer einen Gehalt zyklischer Endgruppen aufweist, der 0,15 Milligrammäquivalent je Gramm nicht übersteigt.

4. Verfahren nach den Ansprüchen 1—3, dadurch gekennzeichnet, dass das Vorpolymer einen Gehalt zyklischer Endgruppen aufweist, der 0,10 Milligrammäquivalent je Gramm nicht übersteigt.

5. Verfahren nach den Ansprüchen 1—4, dadurch gekennzeichnet, dass die Atmosphäre mindestens 5 Vol.-% Wasserdampf enthält.

6. Verfahren nach den Ansprüchen 1—5, dadurch gekennzeichnet, dass die Nachkondensierung bei einem Druck von 0,001 bis

10 bar und einer Temperatur von 225°C bis 275°C durchgeführt wird.

7. Verfahren nach den Ansprüchen 1—6, dadurch gekennzeichnet, dass ein Vorpolymer verwendet wird, welches einen sauren Polykondensationskatalysator enthält.

8. Verfahren nach den Ansprüchen 1—7, dadurch gekennzeichnet, dass ein weisses Polyamid mit einem Molekulargewicht von 15000 bis 75000 hergestellt wird.

9. Verfahren nach den Ansprüchen 1—8, dadurch gekennzeichnet, dass ein weisses Polyamid mit einem Molekulargewicht von 20000 bis 50000 hergestellt wird.

10. Verfahren nach den Ansprüchen 1—9, dadurch gekennzeichnet, dass das Homopolymer Polytetramethylenadipamid hergestellt wird.

11. Polyamid, gewonnen durch Anwendung des Verfahrens nach einem oder mehreren der Ansprüche 1—10.

12. Teil, ganz oder teilweise aus Polyamid bestehend, welches durch Anwendung des Verfahrens nach einem oder mehreren der Ansprüche 1—10 gewonnen wurde.

**Revendications**

1. Méthode pour la préparation de polyamide blanc de poids moléculaire élevé constitué de mailles de

$$[NH—(CH_2)_4—NH—CO—(CH_2)_4—CO],$$

contenant éventuellement jusqu'à 20% en poids de mailles dérivées d'autres composés générateurs de polyamide, par post-condensation d'un prépolymère de poids moléculaire peu élevé, constitué de telles mailles, caractérisée en ce que le prépolymère a une teneur en groupes terminaux cycliques ne dépassant pas 0,20 milliéquivalent-gramme par gramme et a été préparé en utilisant un excès de 0,5 à 15 moles % de 1,4-diaminobutane par rapport à la quantité équivalente à l'acide adipique utilisé, et ce prépolymère est soumis à une post-condensation dans la phase solide dans une atmosphère contenant de la vapeur d'eau.

2. Méthode selon la revendication 1, caractérisée en ce qu'on part d'un prépolymère qui a été préparé avec utilisation d'un excès de 1,4-diaminobutane compris entre 1 et 5 moles %.

3. Méthode selon les revendications 1—2, caractérisée en ce que le prépolymère a une teneur en groupes terminaux cycliques qui ne dépasse pas 0,15 méq/g.

4. Méthode selon les revendications 1—3, caractérisée en ce que le prépolymère a une teneur en groupes terminaux cycliques qui ne dépasse pas 0,10 méq/g.

5. Méthode selon les revendications 1—4, caractérisée en ce que l'atmosphère contient au moins 5% en volume de vapeur d'eau.

6. Méthode selon les revendications 1—5, caractérisée en ce que la post-condensation est effectuée à une pression comprise entre 0,1 kPa et $10^3$ kPa à une température comprise entre 225°C et 275°C.

7. Méthode selon les revendications 1—6, caractérisée en ce qu'on utilise un prépolymère contenant un catalyseur de polycondensation acide.

8. Méthode selon les revendications 1—7, caractérisée en ce qu'on prépare un polyamide blanc d'un poids moléculaire compris entre 15 000 et 75 000.

9. Méthode selon les revendications 1—8, caractérisée en ce qu'on prépare un polyamide blanc d'un poids moléculaire compris entre 20 000 et 50 000.

10. Méthode selon les revendications 1—9, caractérisée en ce qu'on prépare l'homopolymère polytétraméthylène adipamide.

11. Polyamide obtenu en utilisant la méthode selon l'une quelconque des revendications 1—10.

12. Objet constitué entièrement ou partiellement de polyamide obtenu en utilisant la méthode selon l'une quelconque des revendications 1—10.